# EUROPEAN PATENT SPECIFICATION

(11) **EP 0 491 372 B1**
(45) Date of publication and mention of the grant of the patent: **12.07.1995**
(21) Application number: 91121678.6
(22) Date of filing: 18.12.1991
(51) Int. Cl.: A23N 15/00

(54) **Device for automatically milling the bristle-like material from the internal part of an artichoke bottom**
Automatische Mahleinrichtung zur Entfernung des haarigen Materials im Inneren von Artichokenböden
Dispositif de broyage automatique pour l'élimination du material poilu se trouvant dans l'intérieur du fond d'un artichaut

(30) Priority: 19.12.1990 IT 8502390
(43) Date of publication of application: 24.06.1992
(73) Proprietor: Tomelleri, Tiziana, I-37131 Verona (IT); Nocini, Filippo, I-37131 Verona (IT)
(72) Inventor: Nocini, Filippo, I-37131 Verona (IT)
(74) Representative: Petraz, Gilberto Luigi

(56) References cited:
- FR-A- 2 166 491
- FR-A- 2 469 882
- US-A- 2 687 156
- US-A- 2 716 480

## Description

The present invention relates to a device for automatically milling the inner portion of artichoke bottoms, said device being suitable for being used in cooperation with a machine carrying out a process for obtaining artichoke bottoms.

The present invention may mainly be applied in the field of foodstuffs preparing, transforming and preserving industry.

According to a known process for obtaining artichoke hearts, a small to medium sized artichoke (i.e. having a diameter up to about 90 mm) undergoes various working steps in a semi-automatic machine, its is progressively peeled and turned until its heart is obtained, which is then discharged into a discharging station.

This process and this machine are described in detail in italian patent n. 1.117.844, which constitutes the prior art underlying the present invention; the reader may refer to this document for a detailed description concerning how an artichoke is firstly clamped and then conveyed towards the different working stations.

The process according to italian patent n. 1.117.844 is carried out by means of a semi-automatic machine having an intermittent reciprocating movement, in which the artichokes are firstly manually set between the jaws of a clamping device which firmly clamps each artichoke.

At the same time, the stem is placed into a bore of a positioning plate which is arranged under the jaws and which is movable together with said jaws according to a horizontal direction.

The artichoke is then horizontally translated by means of a gear provided with chains and crowns towards a first working station, in which the stem is shortened, a second working station, in which the leaves associated to the remaining stem portion are cut away and the artichoke is placed at a predetermined height, a third station in which the stem is cut away in correspondence of the artichoke bottom, a fourth station in which the artichoke is deeply turned to obtain its central portion or heart, and in which the artichoke is topped, and a fifth, final station, in which the artichoke heart is discharged.

This process is quite efficient, and allows a high hour-production of artichoke hearts to be achieved; however, the machine for carrying out said process is not provided with a mechanism for obtaining, rather than the artichoke heart, the bottom portion of the artichoke, cleared from that bristle-like, hair shaped material which is always present in large-sized artichokes.

However, the foodstuffs producing industry strongly requires this specific part of the fruit.

Document FR-A-2,469,882 discloses an apparatus for obtaining artichoke bottom portions.

The apparatus comprises a fixed frame and a chain conveyor on which a series of cups is assembled, each cup being suitable for housing an artichoke with its stem directed upwards.

Although each artichoke receiving cup has a tapered shape, and is provided with artichoke retaining ribs on its inner surface, the cup is only suitable for housing artichokes having predetermined dimensions; medium size artichokes necessarily require smaller cups than large size artichokes; therefore, it is necessary to replace the cups for working artichokes of different sizes.

Furthermore, the apparatus is provided with a rotatable drum having a further series of cups in order to pick up the artichokes from the cups which are integral to the conveyor chains and to enable a special cutter to remove the bristles from innner part of the artichoke; this configuration is complicated and requires both retaining means for holding the artichoke bottom while the drum is rotating, thereby preventing the bottom portion to drop out of the cup and, once the inner part has been milled, means for exerting a thrust on the artichoke bottom for allowing the same to be discharged.

Owing to its general structure, the mechanism may not be adapted to the apparatus disclosed in said italian patent.

The present invention aims to obviate to the disadvantages and drawbacks which are typical of the background art, and to provide for a device for automatically milling the inner portion of artichoke bottoms, said device having a relatively simple structure and allowing a high hour-production of artichoke bottoms to be achieved.

This is obtained by means of a device having the features described in claim 1.

The dependent claims outline advantageous forms of embodiment of the device according to the invention.

The process for obtaining artichoke bottoms provides for some working steps similar to those which are disclosed in Italian patent n. 1.117.844.

In fact, the artichoke is firstly manually placed between two jaws of a translating mechanism, the stem being at the same time inserted into a bore of a plate for vertically positioning the artichoke.

During the advancing movement, the artichoke stem is advantageously cut by means of a fixed saw, which prevents the stem to be engaged in the bore of the positioning plate.

Thereafter, the stem is again shortened by means of a circular saw, the leaves connected to the stem are cut and the artichoke is positioned at a predetermined height; finally, the artichoke is cut to size in correspondence of the end of the bottom, it is turned in order to give it a predetermined shape and cut in correspondence of the upper part of the bottom, thereby dropping into a collecting chute.

Here the artichoke bottom, which is still provided with a bristle-like, hair shaped material, is manually placed on a cup blonging to the device according to the present invention and is brought to a circular miller which eliminates said bristle-like material.

The artichoke bottom is then discharged for further preserving treatments.

Other features and advantages of the invention will become apparent from reading the following description, of a form of embodiment of the invention, given as a non-limiting example, with the help of the figures shown in the attached drawings, in which:
- - fig. 1: shows a schematical side view of a machine suitable for carrying out a process for obtaining artichoke bottoms;
- - fig. 2: shows a schematical side view of the device for automatically milling the artichoke bottoms according to the present invention;
- - fig. 3: shows a schematical plan view of the different working stations of the machine of fig. 1;
- - fig. 4: schematically illustrates the different working steps for obtaining an artichoke bottom.

In the figures, reference sign 10 generally indicates a semiautomatic device for carrying out a process for obtaining artichoke bottom parts.

Said device or machine comprises a gear for conveying the artichokes similar to the one described in italian patent n. 1.117.844; the reader may refer to this document in what concerns said gear.

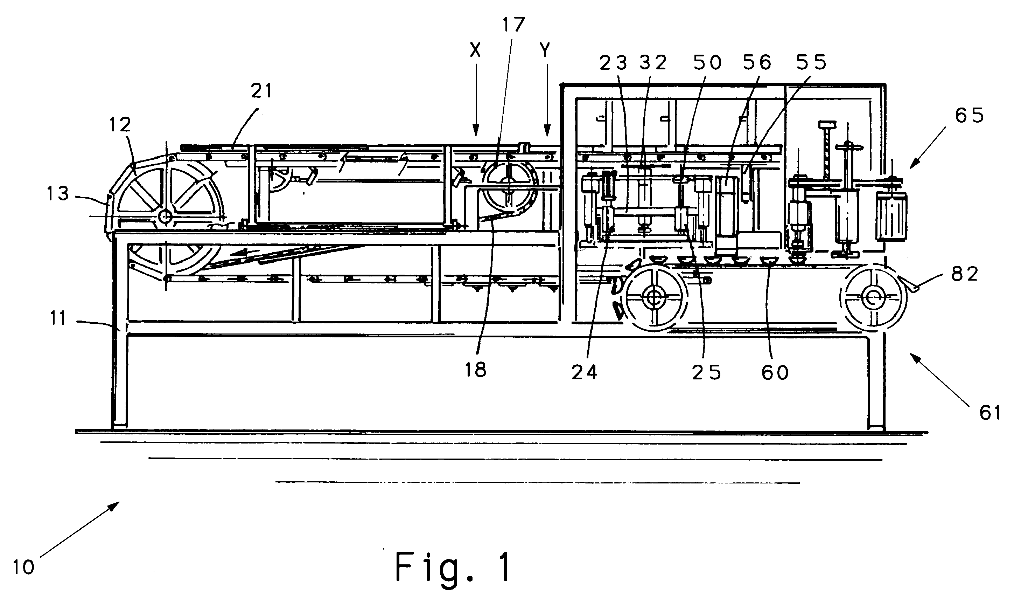

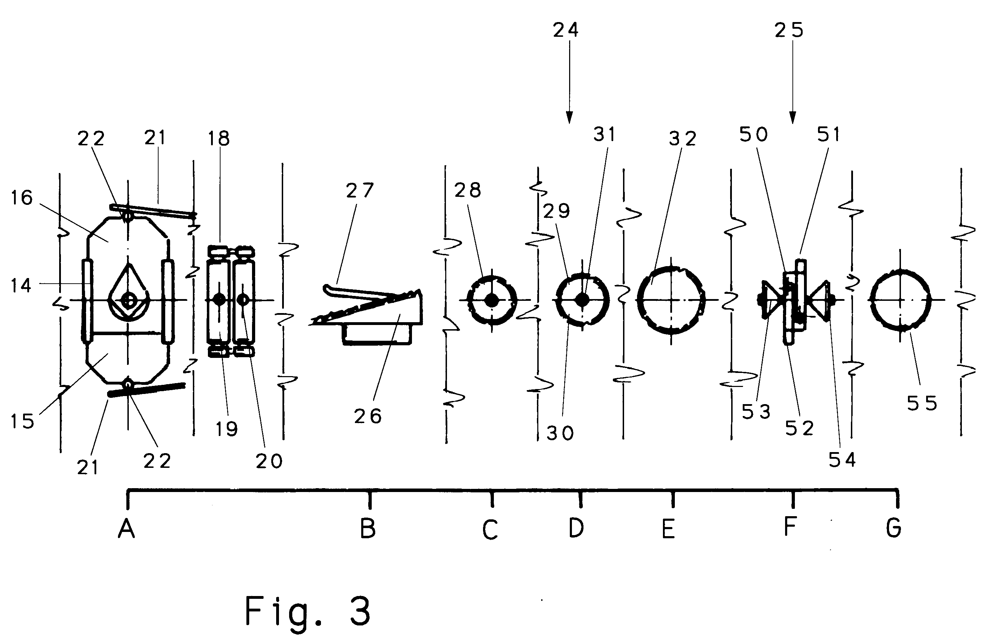

We just point out that the machine comprises two pairs of toothed wheels 12 (one of which may be seen in fig. 1) supported on a fixed frame 11, the shaft of said wheels being intermittently rotatably driven by means of a motor acting through a helical gear and a reduction gear (not shown in fig. 1); a pair of stud chains 13 is connected to the pairs of motion trasmitting toothed wheels 12 and it carries a series of guides 14 (see also fig. 3) suitable for supporting pairs of artichoke clamping jaws 15, 16).

Furthermore, the same intermittent drive is transmitted to other two pairs of toothed wheels 17, connected to which by means of chains 18 is a series of supporting plates 19 provided with bores 20.

The motion is transmitted from wheels 12 to wheels 17 through suitable means.

In operation, an artichoke is manually placed between jaws 15, 16, the artichoke base being positioned on the base of plate 19 and the stem being inserted into bore 20 (see fig. 3) of plate 19; thereafter, during the advancing movement, jaws 15, 16 firmly clamp the artichoke body due to the action of horizontal guides 21 which act on rollers 22 carried by jaws 15, 16, thereby causing said jaws to tightly clamp the artichoke, which is kept in an erected position thanks to the combined action of the jaws andof the supporting plate.

Similarly to the machine disclosed in said italian patent, machine 10 further comprises a second, partially movable, frame 23 which supports a tool 24 suitable for positioning the artichokes at a predetermined height and a tool 25 suitable for turning the bottom part of the artichokes.

Said second frame 23 imparts to tools 24, 25 (whose operation will be hereinafter described in detail) an intermittent reciprocating movement in a vertical direction by means of a cam (not shown) integral to the main driving shaft.

Thus, all the respective movements of:
- advancing the jaws 15, 16 and positioning plates 19;
- raising and lowering tools 24, 25
are coordinated to each other and carried out at the same time.

In order to carry out the process for obtaining artichoke bottom portions, an artichoke is set between jaws 15, 16 and its stem is positioned into bore 20; thereafter, during the advancing movement, jaws 15, 16 compress the artichoke body due to the action of horizontal guides 21 which act on rollers 22 carried by the jaws 15, 16, causing the latter to clamp the artichoke body which, thanks to the combined action of the jaws and of bore 20 of the supporting plate, is therefore kept in an erect position.

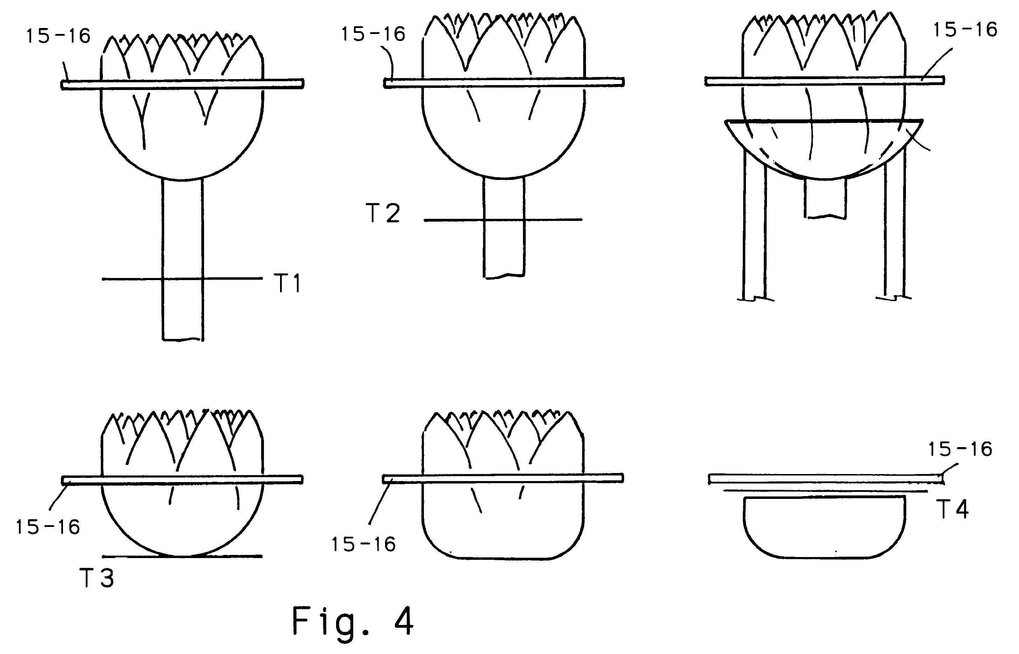

Specifically referring to figures 3 and 4, we shall now describe the first steps of the process for obtaining artichoke bottom portions.

In a first step A, an artichoke is set between jaws 15, 16 and its stem is placed into the bore 20 of a supporting plate 19.

During the intermittent advancing movement, the artichoke stem arrives close to a first fixed saw 26, which cooperates with a fixed guide 27 (step B); said saw 26 is located in the position indicated by arrow X in fig. 1, and carries out a first cut T1 of the artichoke stem, in such a way as said stem may not remain engaged in bore 20 when supporting plates 19 revert their movement.

In a third step C, the artichoke arrives in proximity of a second, circular, saw 28, which carries out a second cut T2 of the artichoke stem in order to facilitate the following positioning operation performed by tool 24.

Said second saw 28 is located in the position indicated by arrow Y in fig. 1; its rotating movement is given by a motor (not illustrated) by means of a belt and pulleys drive.

In a fourth step D, the artichoke momentarily stops in correspondence of tool 24, which is suitable for positioning it at a predetermined height.

In a fifth step E, the artichoke is brought close to a third, circular saw 32, which is also driven by a motor (not shown in the figures) through a belt and pulleys drive.

Said third saw 32 carries out a final cut T3 of the stem in correspondence of the bottom portion of the artichoke body.

Thereafter, in a sixth step F, the artichoke is brought to a position in which it may cooperate with tool 25, which is suitable for turning the bottom portion of the artichoke.

Said tool 25 comprises a rotatable body 50 to which a pair of arcuate blades 51, 52 are fixed; furthermore, said tool comprises two elements 53, 54 which are fixed at both sides of the body and which are suitable for rotating and supporting the bottom portion of the artichoke.

As it has previously been mentioned, tool 25 may be raised and lowered together with second frame 23, and is rotatable about its longitudinal axis by means of a motor (not shown in the figures) acting through a belt and pulleys drive.

Thus, once the artichoke is positioned in correspondence of tool 25, the latter is raised and blades 51, 52 give the bottom portion a predetermined shape.

Finally, in a seventh working step G, the artichoke is cut (T4) just beneath the jaws 15, 16 by means of a fourth, circular saw 55 which is driven by a motor (not shown in the figures) through a belt and pulleys drive.

At this point the artichoke bottom portion, which is still provided, in its internal part, with a bristle like, hair shaped material, drops into a chute 56 and is then manually placed on a cup 60 of a device 61 for milling the internal part of the artichoke bottom portion according to the present invention.

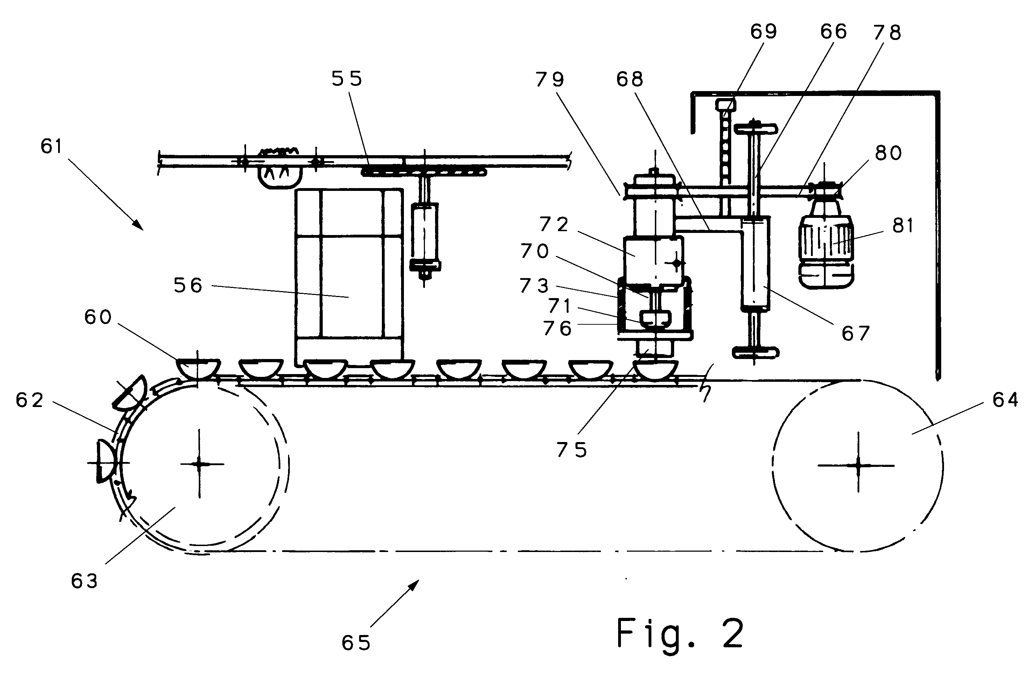

Said device 61 will be described in detail with reference to fig. 2.

Cups 60 are connected to a pair of chains 62 which advance with an alternate intermittent movement thanks to a drive formed by two toothed wheels 63, 64 which are, on their turn, driven by the main driving shaft of device 10.

During the movement, each cup 60, which carries an artichoke bottom portion, is brought in proximity of a tool 65 suitable for milling the internal part of said bottom portion.

Said tool 65 comprises a fixed upright 66 which is integral to the main frame of the machine, said upright forming a vertical guide for a cylinder 67 belonging to a frame 68 which is vertically movable with an alternate and intermittent motion given by the main motor of the machine through a chain drive 69.

Said drive acts in a way which is coordinated with the movement of the cups 60, and is suitable for lowering a mandrel 70, whose head is provided with a milling cutter 71, in the moment of time when a cup 60 is aligned to the mandrel axis.

Furthermore, the frame 68 is provided with a body 72 which is placed around the rotating mandrel 70, and a pair of uprights 73, 74 is connected to said body 72; said uprights 73, 74 act as a guide for a ring-shaped device 75 suitable for pressing the periphery of the artichoke bottom portion and to firmly hold it during the operation of the miller 71.

Said device 75 exerts a resilient pressing action on the artichoke bottom portion, thanks to the presence of compressing springs 76, 77 which are placed around said uprights 76, 77, thereby carrying out a centering action of the artichoke bottom portion relative to the cup 60.

Finally, the rotating movement of mandrel 70 is given by a motor 81 by means of a belt 78 and pulleys 79, 80 drive.

The bottom portion of the artichoke, as cleaned of the bristle-like material, drops the into a chute 82 (see fig. 1) and is thereafter evacuated towards other stations (not illustrated) for further treatments and preservation.

The invention has been described with reference to an advantageous form of embodiment.

However, the invention comprises several variants which fall within its scope; by way of example, the invention comprises forms of embodiment according to which the device for milling the internal part of the artichoke bottom part is assembled on a machine provided with a continuous movement, rather than on a machine provided with an alternate intermittent movement as the one which has been previously described.

In this latter case tool 24, suitable for vertically positioning the artichoke, tool 25, suitable for turning the base and the stem, as well as tool 65, suitable for milling the internal part of artichoke bottom portion, are provided with an intermittent and alternate movement, in order to follow the artichokes during their countinuous movement.

## Claims

1. Device suitable for eliminating from the internal part of the bottom portion of a medium to large sized artichoke the bristle-like, hair-shaped material which is present in said internal part, said device being suitable for cooperating with a machine for obtaining artichoke bottoms, characterized in that it comprises a first frame supporting a series of cups (60) for advancing said artichoke bottom portions inside of said cups, the advancing movement of said cups (60) being caused by a chains (62) and toothed wheels (63, 64) drive, and a tool (65) for milling the internal part of said artichoke bottom portion comprising milling means (70-72) being suitable for eliminating from said bottom portion the bristle-like material.

2. Device according to claim 1 characterized in that said milling means (70-72) comprise a mandrel (70) whose head is provided with a rotating miller cutter (71), said mandrel (70) being supported by a body (72) which is movable in a vertical direction relative to a second frame (68).

3. Device according to claim 2, characterized in that said body (72) is provided with means (75) for centering and clamping the artichoke bottom portion inside of said cups (60).

4. Device according to claim 3, characterized in that said centering and clamping means comprise a pair of uprights (73, 74) connected to said body (72) and forming a guide for the movement in a vertical direction of a ring (75) suitable for centering and clamping the artichoke.

5. Device according to claim 4, characterized in that resilient means (76, 77) are interposed between said body (72) and said ring (75).

6. Device according to claim 1, characterised in that said milling tool (65) is integral to a third frame (68) which is movable in a vertical direction simultaneously and in a coordinated way with the artichoke advancing movement, said tool (65) being further provided with a mandrel (70) rotatably movable by means of a motor about its longitudinal axis and comprising a head having a cutter (71) for milling the internal part of the artichoke bottom portion, each cup (60) carrying an artichoke bottom portion being intermittently brought in correspondence of said milling tool (65).

7. Device according to claim 6, characterized in that a device (75) suitable for blocking the periphery of the artichoke bottom portion is placed around said mandrel (70), said device (75) being integral to said second frame (68) and being provided with means (76, 77) suitable for exerting a resilient thrust on said periphery.

## Patentansprüche

1. Vorrichtung zur Entfernung von borstigem Material aus dem Innern des Bodens einer mittelgroßen bis großen Artischocke, das sich eben in diesem inneren Teil des Artischockenbodens befindet, wobei diese Vorrichtung zusammen mit einer Maschine zur Herausarbeiten von Artischockenböden wirkt dadurch gekennzeichnet, daß sie ein erstes Gestell umfaßt, das eine Anzahl an Bechern (60) trägt, um die Artischockenböden zu bewegen, wobei die Vorwärtsbewegung der Becher (60) durch einen Mechanismus mit Ketten (62) und Zahnrädern (63, 64) hervorgerufen wird, der weiterhin ein Werkzeug (65) zum Herausfräsen der inneren Teilen der Artischockenböden umfaßt, das mit Fräsmitteln (70-72) versehen ist, die dazu geignet sind, das borstige Material vom Artischockenboden zu entfernen.

2. Vorrichtung nach Anspruch 1, dadurch gekennzeichnet, daß die Fräsmittel (70-72) einen Hohldorn (70) mit einem Messerkopf (71) umfassen, wobei der Hohldorn (70) von einem Körper (72) getragen wird, der sich in eine senkrechte Richtung gegenüber einem zweiten Gestell bewegen kann.

3. Vorrichtung nach Anspruch 2, dadurch gekennzeichnet, daß der Körper (72) mit Mitteln (75) zum Zentrieren und zum Festhalten des Artischockenbodens in dem Becher (60) versehen ist.

4. Vorrichtung nach Anspruch 3, dadurch gekennzeichnet, daß die Mittel zum Zentrieren und zum Festhalten des Artischockenbodens ein Paar Ständer (73, 74) umfassen, die mit dem Körper (72) verbunden sind und eine Führung für die senkrechte Bewegung eines Rings (75) bilden, der zum Zentrieren und Festhalten der Artischocke dient.

5. Vorrichtung nach Anspruch 4, dadurch gekennzeichnet, daß elastische Mittel (76, 77) zwischen dem Körper (72) und dem Ring (75) zwischengelegt sind.

6. Vorrichtung nach Anspruch 4, dadurch gekennzeichnet, daß das Fräswerkzeug (65) fest an ein drittes Gestell (68) ist, das sich in senkrechter Richtung, gleichzeitig und koordiniert mit der Vorwärtsbewegung der Artischocken bewegt, wobei dieses Fräswerkzeug (65) mit einem Hohldorn (70) versehen ist, der sich mittels eines Motors um die eigene Längsrichtung dreht, und einen Kopf mit einer Fräse (71) umfaßt, die dazu geeignet ist, das innere Teil des Artischockenbodens herauszufräsen, wobei jeder Becher (60), der einen Artischockenboden trägt, aussetzend in Übereinstimmung mit dem Fräswerkzeug (65) angeordnet wird.

7. Vorrichtung nach Anspruch 6, dadurch gekennzeichnet, daß eine Vorrichtung (75) zum Festhalten des Artischockenbodenumfangs um den Hohldorn (70) angeordnet ist, wobei diese Vorrichtung (75) mit dem zweiten Gestell (68) eine Einheit bildet und mit Mitteln (76, 77) versehen ist, die dazu geeignet sind, einen elastischen Druck auf den Umfang auszuüben.

## Revendications

1. Dispositif pour éliminer de la portion intérieure du fond d'un artichaut ayant une taille de moyenne à grande le matériel poilu se trouvant dans ladite portion intérieure, ledit dispositif pouvant coopérer avec une machine pour obtenir des fonds d'artichaut, caractérisé en ce qu'il comprend un premier chassis supportant une série de coupes (60) pour avancer lesdits fonds d'artichaut à l'intérieur desdites coupes, le mouvement d'avancement desdites coupes (60) étant provoqué par un mécanisme à chaînes (62) et couronnes dentées (63, 64), et en ce qu'il comprend un outil (65) pour broyer la portion intérieure desdits fonds d'artichaut, comportant des moyen de broyage (70-72) pour éliminer ledit matériel poilu desdits fonds.

2. Dispositif selon la revendication 1, caractérisé en ce que lesdits moyens de broyage (70-72) comprennent un mandrin (70) dont la tête est dotée d'une fraise à couteaux (71), ledit mandrin (70) étant supporté par un corps (72) mobile dans une direction verticale par rapport à un deuxième chassis.

3. Dispositif selon la revendication 2, caractérisé en ce que ledit corps (72) est doté de moyens (75) de centrage et de verrouillage du fond d'artichaut à l'intérieur desdites coupes (60).

4. Dispositif selon la revendication 3, caractérisé en ce que lesdits moyens de centrage et de verrouillage comportent une paire de montants (73, 74) reliés audit corps et formant un guide pour le mouvement vertical d'une bague (75) de centrage et verrouillage de l'artichaut.

5. Dispositif selon la revendication 4, caractérisé en ce que des moyens élastiques (76, 77) sont interposés entre ledit corps (72) et ladite bague (75).

6. Dispositif selon la revendication 4, caractérisé en ce que ledit outil de broyage (65) est intégral d'un troisième chassis (68) mobile dans le sens vertical simultanément et d'une façon cordonnée avec le mouvement d'avancement des artichauts, ledit outil (65) étant de plus doté d'un mandrin (70) mobile en rotation autour de son axe longitudinale au moyen d'un moteur, ledit mandrin comportant une tête ayant une fraise (71) pouvant fraiser la portion intérieure du fond d'artichaut, chaque coupe (60) supportant un fond d'artichaut étant placée d'une façon intermittente en correspondence dudit outil de broyage (65).

7. Dispositif selon la revendication 6, caractérisé en ce que un dispositif (75) pour verrouiller la périphérie du fond d'artichaut est placé autour dudit mandrin (70), ledit dispositif (75) étant intégral dudit deuxième chassis (68) et étant doté de moyens (76, 77) qui exercent une poussée élastique sur ladite périphérie.
